# FASCICULE DE BREVET EUROPEEN

(11) **EP 4 128 693 B1**
(45) Date de publication et mention de la délivrance du brevet: **07.01.2026**
(21) Numéro de dépôt: 21714933.5
(22) Date de dépôt: 05.03.2021
(51) Int. Cl.: G06F 21/32, H04L 9/32, H04L 9/40, H04W 12/06, H04M 3/51, H04M 3/493

(54) **AUTHENTIFICATION FORTE D'UN UTILISATEUR D'UN TERMINAL DE COMMUNICATION**
STARKE AUTHENTIFIZIERUNG EINES BENUTZERS EINES KOMMUNIKATIONSENDGERÄTS
STRONG AUTHENTICATION OF A USER OF A COMMUNICATION TERMINAL

(30) Priorité: 27.03.2020 FR 2003059
(43) Date de publication de la demande: 08.02.2023
(73) Titulaire: Orange, 92130 Issy-les-Moulineaux (FR)
(72) Inventeur: MENON, Bruno, 92326 Châtillon Cedex (FR); TCHOUMI, Paul, 92326 Châtillon Cedex (FR); PRUDON, Didier, 92326 Châtillon Cedex (FR); BELDAME, Mathias, 92326 Châtillon Cedex (FR)
(86) Numéro de dépôt international: PCT/FR2021/050381
(87) Numéro de publication internationale: WO 2021/191519

(56) Documents cités:
- GB-A- 2 547 885
- US-A1- 2013 080 166
- US-A1- 2019 259 390

## Description

### Domaine de l'invention

La présente invention se rapporte de manière générale au domaine de l'authentification forte d'un utilisateur d'un terminal de communication.

La présente invention s'applique plus particulièrement à l'authentification d'un utilisateur qui requiert l'accès à un service au moyen de tout type de terminal de communication, y compris les terminaux de communication non dotés de capacités d'accès à Internet.

### Art antérieur

Actuellement, malgré l'apparition des smartphones (téléphones intelligents en français) sur le marché depuis une bonne dizaine d'années, les terminaux de communication basiques, également appelés « feature phone » ou « basic phone » en anglais, restent populaires. De tels terminaux de communication basiques n'étant pas dotés de moyens d'accès à Internet, l'usage de services à haute valeur ajoutée est assez limité car nécessitant une authentification forte de l'utilisateur. Un utilisateur qui requiert l'accès à un service au moyen d'un terminal de communication basique est généralement authentifié à l'aide du numéro de son téléphone mobile, c'est-à-dire son numéro MSISDN (Mobile Station International Subscriber Directory Number). Les documents US 2013/080166, US 2019/259390 et GB 2 547 885 décrivent comment mettre en œuvre une authentification d'un utilisateur d'un terminal, en utilisant l'empreinte vocale de cet utilisateur.

### Objet et résumé de l'invention

Un des buts de l'invention est de remédier à des inconvénients de l'état de la technique précité en proposant aux utilisateurs de terminaux de communication basiques ou non, un accès à davantage de services, notamment ceux nécessitant une authentification forte de l'utilisateur, tel que par exemple un service bancaire, qui soit simple à mettre en œuvre pour l'ensemble de ces terminaux. L'invention est définie dans les revendications indépendantes.

A cet effet, un objet de la présente invention concerne un procédé d'authentification d'un utilisateur d'un service sur un terminal de communication, comprenant ce qui suit, au niveau du terminal de communication :
- envoyer à un serveur une requête d'accès audit serveur, ladite requête comprenant un premier identifiant associé au terminal de communication et un deuxième identifiant associé à un service requis dans ledit serveur,
- recevoir en provenance d'un dispositif d'authentification une requête d'authentification demandant à l'utilisateur de prononcer au moins un mot,
- communiquer ledit au moins un mot prononcé par l'utilisateur au dispositif,
- ledit au moins un mot prononcé correspondant à une empreinte vocale de l'utilisateur préalablement enregistrée en association avec l'identifiant dudit terminal de communication, accéder au service ou recevoir en provenance du dispositif une requête d'authentification complémentaire de l'utilisateur.

L'enchaînement des opérations précitées permet ainsi avantageusement à l'utilisateur d'un terminal de communication, qu'il soit de type smartphone ou encore non doté de capacités d'accès à Internet comme c'est le cas d'un terminal basique, d'accéder de façon très sécurisée à un service manipulant des données sensibles propres à l'utilisateur (données bancaires ou médicales de l'utilisateur par exemple), grâce à :
- une reconnaissance de l'identifiant du terminal de communication, tel que par exemple le numéro d'appel, qui est couplée à
- un mécanisme de biométrie vocale.

Selon un mode de réalisation particulier, la requête d'authentification complémentaire reçue est une requête de demande de mot de passe, à laquelle, en réponse, le terminal communique le mot de passe requis sous forme textuelle ou vocale.

La réception d'une telle requête de demande de mot de passe permet d'améliorer encore davantage la sécurité de l'accès au service requis par le terminal de communication en apportant un niveau d'authentification supplémentaire pour l'utilisateur.

Selon un autre mode de réalisation particulier, le deuxième identifiant associé au service requis appartient au groupe comprenant un code à Tonalités Multi-Fréquences à deux tons, un code ussd (« Unstructured Supplementary Service Data »), un message sms (« Short Message Service »).

Grâce à l'utilisation d'un canal de communication de type DTMF (abréviation anglaise de « dual-tone multi-frequency »), ussd ou SMS, dont l'avantage est d'être largement répandu sur la plupart des terminaux de communication du marché, et en particulier sur les terminaux de communication non dotés de capacités d'accès à Internet, il est ainsi possible de sécuriser ce type d'accès en faisant bénéficier l'utilisateur d'une authentification forte, voire très forte, de ce dernier. Ainsi, le taux de fraude sur ce type d'accès est grandement réduit.

Selon un autre mode de réalisation particulier, le au moins un mot prononcé qui est communiqué au dispositif d'authentification est identifié selon au moins une caractéristique physique de l'utilisateur.

L'avantage d'utiliser au moins une caractéristique physique de l'utilisateur pour identifier ledit au moins un mot prononcé par celui-ci réside dans le fait que ce type de caractéristique est impossible à reproduire par une personne mal intentionnée qui souhaiterait accéder au service requis par l'utilisateur de manière frauduleuse. La fiabilité d'accès à des services par des terminaux basiques est donc ainsi renforcée. Selon un autre mode de réalisation particulier, ladite au moins une caractéristique physique appartient au groupe comprenant l'intonation, la cadence, l'accent avec le ou laquelle l'utilisateur prononce le mot.

Les différents modes ou caractéristiques de réalisation précités peuvent être ajoutés indépendamment ou en combinaison les uns avec les autres, au procédé d'authentification défini ci-dessus.

L'invention concerne également un terminal de communication pour mettre en œuvre un accès authentifié d'un utilisateur à un service, ledit terminal comprenant un processeur qui est configuré pour mettre en œuvre ce qui suit :
- envoyer à un serveur une requête d'accès au serveur, la requête comprenant un premier identifiant associé au terminal de communication et un deuxième identifiant associé au service requis dans le serveur,
- recevoir en provenance d'un dispositif d'authentification une requête d'authentification demandant à l'utilisateur de prononcer au moins un mot,
- communiquer ledit au moins un mot prononcé par l'utilisateur au dispositif,
- ledit au moins un mot prononcé correspondant à une empreinte vocale de l'utilisateur préalablement enregistrée en association avec l'identifiant dudit terminal de communication, accéder au service ou recevoir en provenance du dispositif une requête d'authentification complémentaire de l'utilisateur.

L'invention concerne également un dispositif d'authentification d'un utilisateur d'un service accédé au moyen d'un terminal de communication, le dispositif comprenant un processeur qui est configuré pour mettre en œuvre ce qui suit :
- recevoir en provenance d'un serveur ayant reçu une requête d'accès audit serveur envoyée par le terminal de communication, un premier identifiant associé au terminal de communication et un deuxième identifiant associé au service requis dans le serveur,
- envoyer au terminal de communication associé au premier identifiant une requête d'authentification demandant à l'utilisateur de prononcer au moins un mot,
- recevoir en provenance du terminal le mot prononcé,
- ledit au moins un mot prononcé correspondant à une empreinte vocale de l'utilisateur préalablement enregistrée en association avec le premier identifiant, autoriser l'accès du terminal au service ou envoyer au terminal une requête d'authentification complémentaire de l'utilisateur.

L'invention concerne encore un système d'authentification comprenant le terminal et le dispositif d'authentification précités.

L'invention concerne encore un programme d'ordinateur comportant des instructions pour la mise en œuvre du procédé d'authentification selon l'invention, selon l'un quelconque des modes particuliers de réalisation décrits précédemment, lorsque ledit programme est exécuté par un processeur.

De telles instructions peuvent être stockées durablement dans un support mémoire non transitoire du terminal de communication mettant en œuvre le procédé d'authentification précité.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé d'authentification précité.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
[Fig. 1] la figure 1 représente un système d'authentification selon un mode de réalisation de l'invention,
[Fig. 2] la figure 2 représente un serveur de fourniture de service dans un mode de réalisation particulier de l'invention,
[Fig. 3] la figure 3 représente un dispositif d'authentification dans un mode de réalisation particulier de l'invention,
[Fig. 4] la figure 4 représente un terminal de communication dans un mode de réalisation particulier de l'invention,
[Fig. 5A] la figure 5A représente les principales actions mises en œuvre dans le procédé de création d'empreinte vocale qui précède l'authentification, selon un mode de réalisation particulier de l'invention,
[Fig. 5B] la figure 5B représente les principales actions mises en œuvre dans le procédé d'authentification, selon un mode de réalisation particulier de l'invention.

### Description détaillée d'un mode de réalisation de l'invention

### Environnement architectural

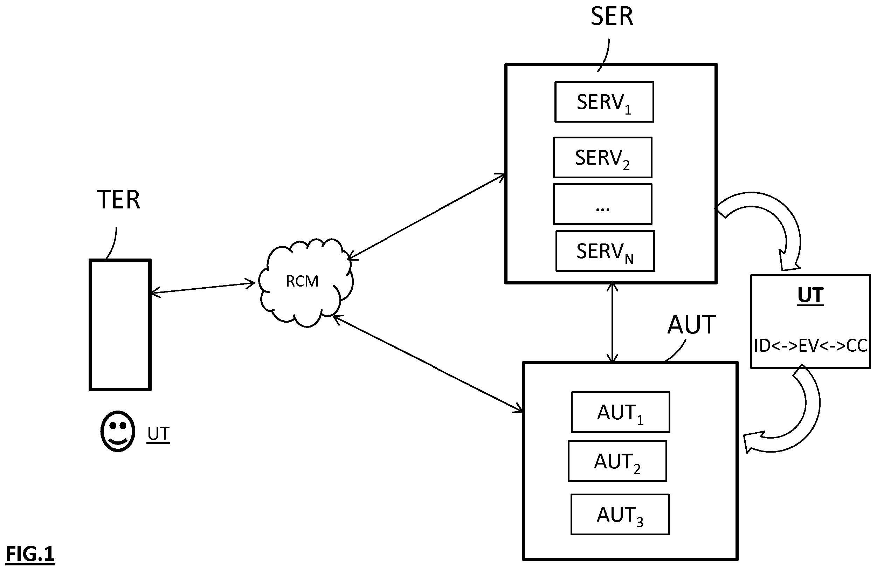

La figure 1 représente un environnement dans lequel est mis en œuvre le procédé d'authentification selon l'invention.

Sur la figure 1 est représenté un système d'authentification comprenant :
- un terminal de communication TER de type smartphone ou encore de type basique ou de type « feature phone », c'est-à-dire non doté de capacités d'accès à Internet,
- un serveur SER de fourniture de service,
- un dispositif d'authentification AUT d'un utilisateur UT du terminal TER lors de l'accès à un service proposé par le serveur SER.

Bien que le dispositif d'authentification AUT soit distinct du serveur SER sur la figure 1, le dispositif d'authentification AUT pourrait être intégré au serveur SER pour former une seule entité.

Le serveur SER et le dispositif d'authentification AUT communiquent entre eux via tout type de réseau de communication (non représenté). Il peut s'agir par exemple d'un réseau de type IP (abréviation anglaise de « Internet Protocol »), d'un réseau de type x-DSL, fibre ou encore 3G, 4G, 5G, etc..... Dans le cas où le serveur SER et le dispositif d'authentification AUT sont à proximité l'un de l'autre, ils peuvent également communiquer via un réseau local sans fil, en particulier du type WiFi ou CPL (abréviation de « courants porteurs en ligne »).

Le terminal de communication TER est configuré pour :
- communiquer vocalement avec le serveur SER afin d'enregistrer dans le serveur SER et/ou dans le dispositif d'authentification AUT une empreinte vocale EV de l'utilisateur UT en association avec un identifiant ID du terminal de communication TER,
- communiquer vocalement ou textuellement :
   - avec le serveur SER afin de requérir l'accès à un service proposé dans le serveur SER,
   - avec le dispositif d'authentification AUT afin d'authentifier l'utilisateur UT lors de l'accès au service proposé.

Une telle communication est mise en œuvre au moyen d'un réseau de communication mobile RCM, typiquement un réseau de communication mobile d'un opérateur, de type 2G, 3G, 4G, etc...

Le serveur SER est configuré pour fournir une pluralité de services SERV₁ à SERV_{N}. Il peut s'agir par exemple d'une plateforme d'un opérateur mobile proposant un bouquet de services tels que par exemple un service d'accès à une archive des factures de communication de l'utilisateur UT, un service d'accès au paiement de ses factures, un service d'accès à une communauté d'abonnés, un service d'accès à la consultation d'un solde d'unités de communication, etc..... Selon un autre exemple non limitatif, le serveur SER pourrait être un serveur bancaire proposant un bouquet de services tels que par exemple un service de consultation des comptes bancaires de l'utilisateur UT, un service d'opposition, un service de prélèvement, etc...

En fonction de la sensibilité des données manipulées lors de l'accès à ces services, certains services peuvent être rendus accessibles au moyen d'une authentification simple de l'utilisateur UT, alors que d'autres services peuvent être rendus accessibles au moyen d'une authentification forte de l'utilisateur UT et d'autres services encore peuvent être rendus accessibles au moyen d'une authentification très forte de l'utilisateur UT.

Le serveur SER est en outre configuré pour enregistrer l'empreinte vocale EV de l'utilisateur UT dans le serveur SER et/ou dans le dispositif d'authentification AUT, en association avec un identifiant ID du terminal de communication TER, suite à un apprentissage de la voix de l'utilisateur UT communiquée via le réseau de communication RCM.

Le dispositif d'authentification AUT est configuré pour, suite à la réception dans le serveur SER, via le réseau de communication RCM, d'une requête d'accès à un service en provenance du terminal TER, mettre en œuvre, en fonction du service requis, soit une authentification AUT₁, de premier niveau (simple), soit une authentification AUT₂, de deuxième niveau (forte), soit une authentification AUT₃ de troisième niveau (très forte). Le dispositif d'authentification AUT est configuré pour communiquer avec le terminal TER vocalement ou textuellement, via le réseau de communication mobile RCM.

### Description d'un mode de réalisation du serveur SER

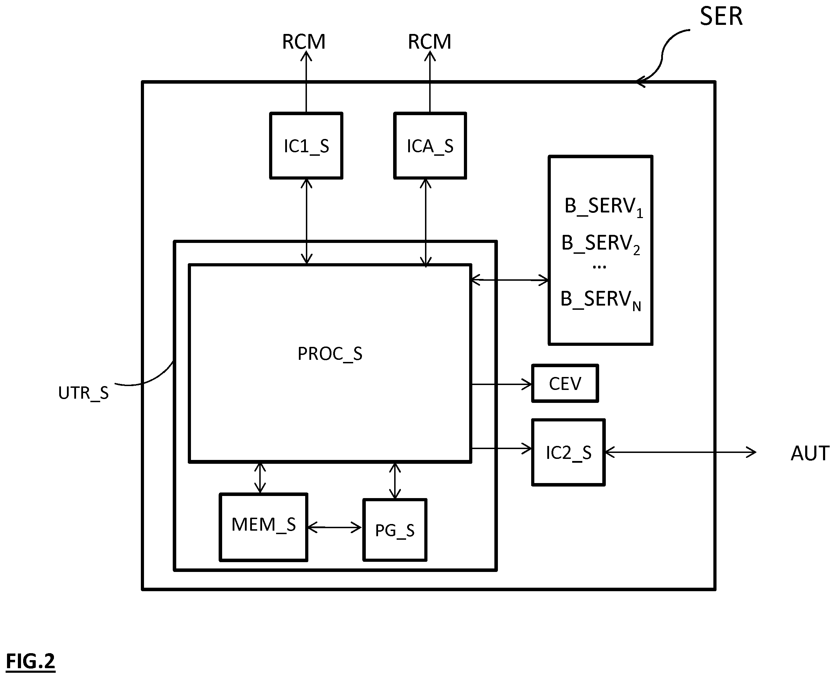

La figure 2 présente la structure simplifiée du serveur SER qui est adapté pour fournir des services à l'utilisateur UT via le réseau de communication mobile RCM dans le cadre du procédé d'authentification qui va être décrit ci-dessous. Il s'agit par exemple d'un serveur vocal interactif.

Un tel serveur comprend :
- une pluralité de briques logicielles de service B_SERV₁ à B_SERV_{N},
- un module logiciel CEV de création d'empreinte vocale,
- une interface de communication audio ICA_S qui est adaptée pour communiquer vocalement, via le réseau de communication mobile RCM, avec le terminal TER de l'utilisateur UT,
- une interface de communication IC1_S qui est adaptée pour fonctionner selon certains protocoles, tels que par exemple SMS et/ou DTMF et/ou ussd, via le réseau RCM, et communiquer avec le terminal TER de l'utilisateur UT,
- une interface de communication IC2_S qui est adaptée pour communiquer avec le dispositif d'authentification AUT, selon par exemple le protocole IP (abréviation anglaise de « Internet Protocol »), x-DSL, fibre, 3G, 4G, 5G, etc., WiFi, CPL, ou autres.

Selon un mode particulier de réalisation de l'invention, les actions exécutées par le serveur SER pour fournir les services et créer les empreintes vocales sont mises en œuvre par des instructions d'un programme d'ordinateur PG_S. Pour cela, le serveur SER a l'architecture classique d'un ordinateur et comprend notamment une mémoire MEM_S, une unité de traitement UTR_S, équipée par exemple d'un processeur PROC_S, et pilotée par le programme d'ordinateur PG_S stocké en mémoire MEM_S. Le programme d'ordinateur PG_S comprend des instructions pour mettre en œuvre les actions de fourniture de service et de création d'empreinte vocale mises en œuvre dans le cadre du procédé d'authentification qui va être décrit ci-dessous, lorsque le programme est exécuté par le processeur PROC_S, selon l'un quelconque des modes particuliers de réalisation de l'invention.

A l'initialisation, les instructions de code du programme d'ordinateur PG_S sont par exemple chargées dans une mémoire RAM (non représentée) avant d'être exécutées par le processeur PROC_S. Le processeur PROC_S de l'unité de traitement UTR_S met notamment en œuvre les actions du procédé de fourniture de service et de création d'empreinte vocale, selon les instructions du programme d'ordinateur PG_S.

### Description d'un mode de réalisation du dispositif d'authentification AUT

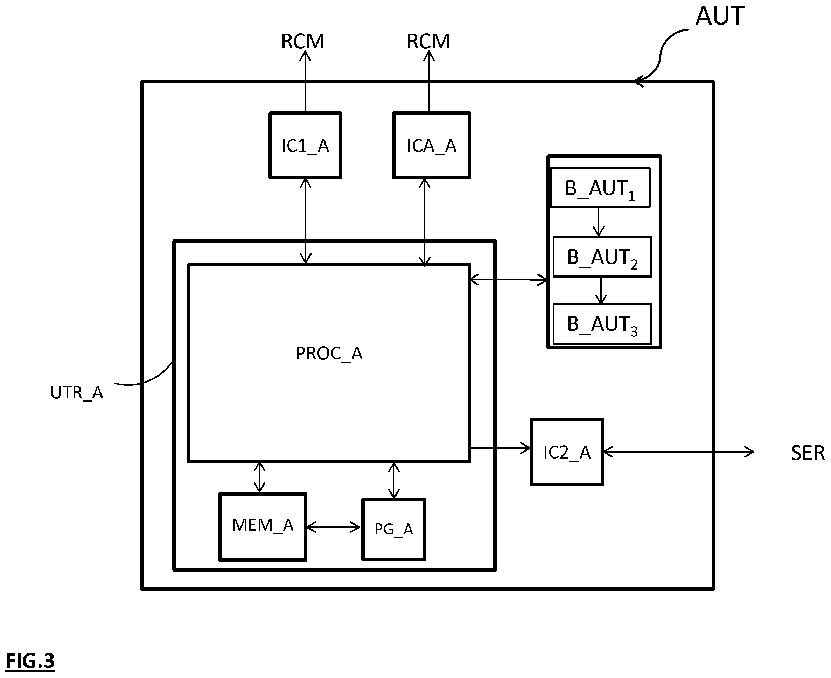

La figure 3 présente la structure simplifiée du dispositif d'authentification AUT qui est adapté pour authentifier l'utilisateur UT, via le réseau de communication mobile RCM, lorsque l'utilisateur UT souhaite accéder, via son terminal TER, à un service proposé par le serveur SER.

Un tel dispositif d'authentification AUT comprend :
- trois briques logicielles d'authentification B_AUT₁, B_AUT₂, B_AUT₃,
- une interface de communication audio ICA_A qui est adaptée pour communiquer vocalement, via le réseau de communication mobile RCM, avec le terminal TER de l'utilisateur UT,
- une interface de communication IC1_A qui est adaptée pour fonctionner selon certains protocoles, tels que par exemple SMS et/ou DTMF et/ou ussd, via le réseau RCM, et communiquer avec le terminal TER de l'utilisateur UT,
- une interface de communication IC2_A qui est adaptée pour communiquer avec le serveur SER, selon par exemple le protocole IP, x-DSL, fibre, 3G, 4G, 5G, etc., WiFi, CPL, ou autres.

Selon un mode particulier de réalisation de l'invention, les actions exécutées par le dispositif d'authentification AUT pour authentifier l'utilisateur UT sont mises en œuvre par des instructions d'un programme d'ordinateur PG_A. Pour cela, le dispositif d'authentification AUT a l'architecture classique d'un ordinateur et comprend notamment une mémoire MEM_A, une unité de traitement UTR_A, équipée par exemple d'un processeur PROC_A, et pilotée par le programme d'ordinateur PG_A stocké en mémoire MEM_A. Le programme d'ordinateur PG_A comprend des instructions pour mettre en œuvre le procédé d'authentification qui va être décrit ci-dessous, lorsque le programme est exécuté par le processeur PROC_A, selon l'un quelconque des modes particuliers de réalisation de l'invention.

A l'initialisation, les instructions de code du programme d'ordinateur PG_A sont par exemple chargées dans une mémoire RAM (non représentée) avant d'être exécutées par le processeur PROC_A. Le processeur PROC_A de l'unité de traitement UTR_A met notamment en œuvre les actions du procédé d'authentification, selon les instructions du programme d'ordinateur PG_A.

### Description d'un mode de réalisation du terminal de communication TER

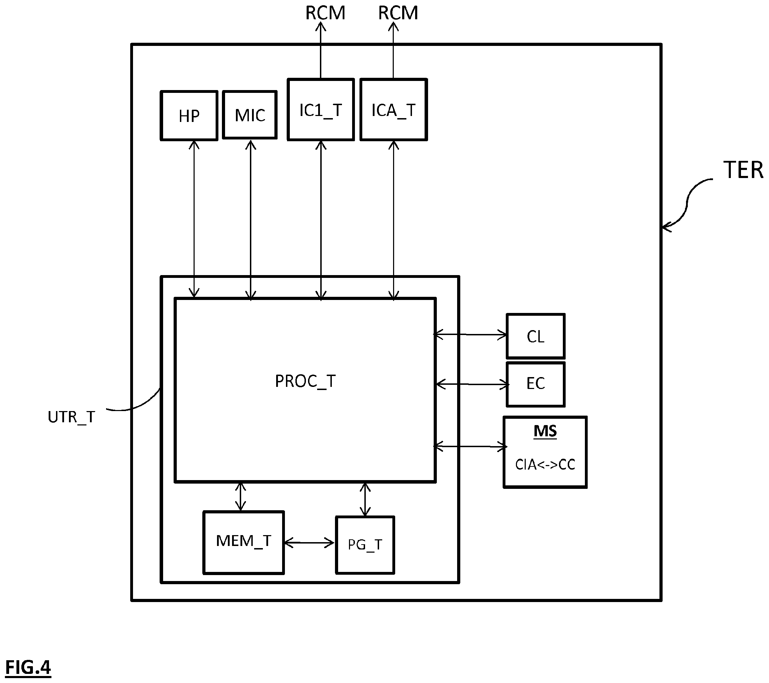

La figure 4 présente la structure simplifiée du terminal de communication TER adapté pour accéder à un service proposé dans le serveur SER, moyennant une authentification de l'utilisateur UT de ce terminal.

Comme déjà mentionné plus haut, le terminal de communication TER est un smartphone ou encore un terminal basique ou *feature phone.* Dans le cas où le terminal TER est un terminal basique, il n'est pas doté de capacités d'accès à un réseau Internet ou Intranet.

Le terminal de communication TER comprend :
- un écran de visualisation EC,
- un haut-parleur HP,
- un microphone MIC,
- un clavier CL,
- un module de sécurité MS, tel que par exemple une carte d'identification d'abonné CIA du type SIM ou USIM qui est associée à un code confidentiel CC,
- une interface de communication audio ICA_T qui est adaptée pour communiquer vocalement, via le réseau de communication mobile RCM, avec le serveur SER ou le dispositif d'authentification AUT,
- une interface de communication IC1_T qui est adaptée pour fonctionner selon certains protocoles, tels que par exemple SMS et/ou DTMF (abréviation anglaise de « dual-tone multi-frequency ») et/ou ussd, via le réseau RCM, et communiquer avec le serveur SER et le dispositif d'authentification AUT.

Selon un mode particulier de réalisation de l'invention, les actions exécutées pour accéder à un service proposé dans le serveur SER et permettre l'authentification de l'utilisateur UT sont mises en œuvre par des instructions d'un programme d'ordinateur PG_T. Pour cela, le terminal TER a l'architecture classique d'un ordinateur et comprend notamment une mémoire MEM_T, une unité de traitement UTR_T, équipée par exemple d'un processeur PROC_T, et pilotée par le programme d'ordinateur PG_T stocké en mémoire MEM_T. Le programme d'ordinateur PG_T comprend des instructions pour mettre en œuvre la création d'empreinte vocale, l'accès au service et l'authentification de l'utilisateur UT qui vont être décrits ci-dessous, lorsque le programme est exécuté par le processeur PROC_T, selon l'un quelconque des modes particuliers de réalisation de l'invention.

A l'initialisation, les instructions de code du programme d'ordinateur PG_T sont par exemple chargées dans une mémoire RAM (non représentée) avant d'être exécutées par le processeur PROC_T. Le processeur PROC_T de l'unité de traitement UTR_T met notamment en œuvre la création d'empreinte vocale, l'accès au service et l'authentification de l'utilisateur UT, selon les instructions du programme d'ordinateur PG_T.

### Description d'un mode de réalisation du procédé d'authentification

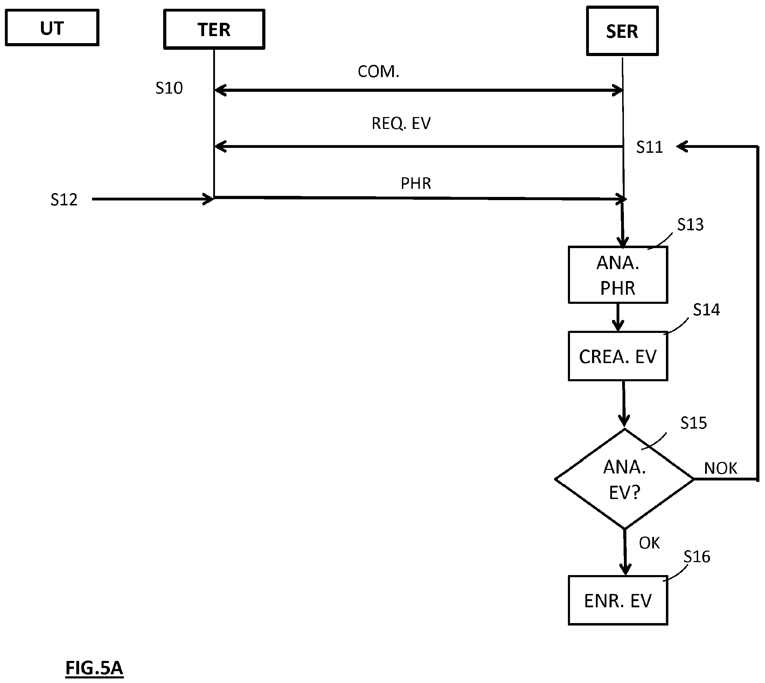

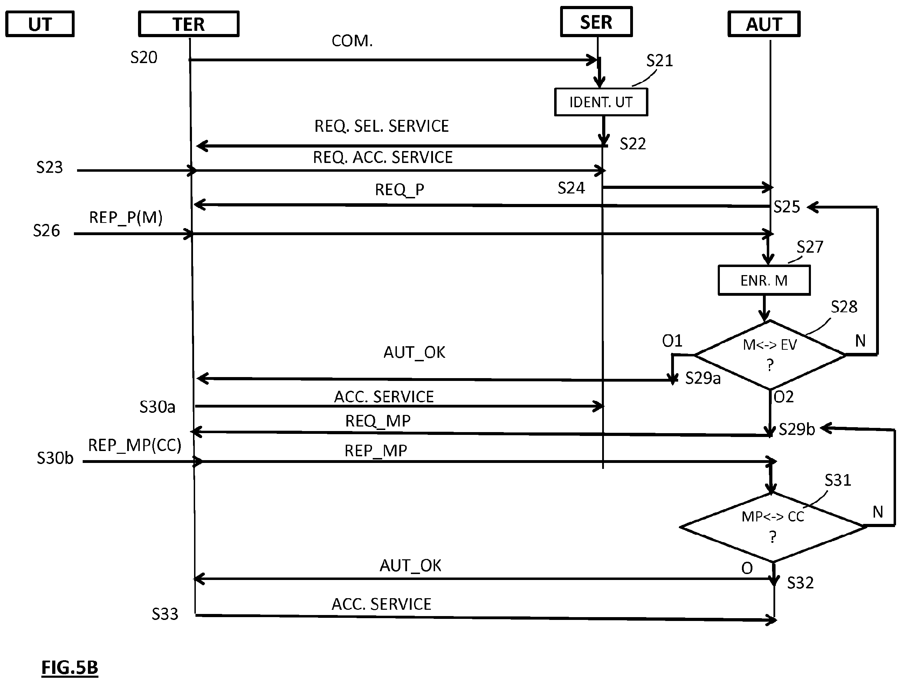

En référence aux figures 5A et 5B, on décrit maintenant le déroulement d'un procédé d'authentification selon un mode de réalisation de l'invention, mis en œuvre dans le système d'authentification de la figure 1.

Un tel procédé d'authentification nécessite la mise en œuvre préalable de la création d'une empreinte vocale EV de l'utilisateur UT qui est décrite figure 5A.

En S10, l'établissement d'une communication COM est réalisé entre le terminal TER et le serveur SER. L'établissement de la communication peut être réalisé à l'initiative du serveur SER, via son interface de communication ICA_S, sous réserve que le serveur SER a une connaissance préalable du numéro MSISDN associé à la carte d'identification d'abonné CIA de l'utilisateur UT. Le numéro MSISDN a par exemple été stocké préalablement dans une mémoire, soit du serveur SER, soit du dispositif d'authentification AUT, soit dans un autre dispositif accessible par le serveur SER et le dispositif d'authentification AUT. En variante, il peut s'agir du numéro IMSI (abréviation anglaise de « International Mobile Subscriber Identity ») qui est l'identifiant« privé» de l'utilisateur UT contenu dans la carte d'identification d'abonné CIA. Une telle communication est de type vocal. Le numéro MSISDN ou le numéro IMSI est un identifiant ID du terminal de communication TER.

En variante, l'établissement de la communication S10 peut être réalisé à l'initiative du terminal TER. Une telle communication peut être vocale, l'utilisateur UT composant sur le clavier CL du terminal TER un numéro de téléphone attribué au serveur SER, la communication étant initiée par l'interface de communication ICA_T du terminal TER, via le réseau RCM. Selon une autre variante, la communication peut être mise en œuvre par l'utilisateur UT en tapant sur le clavier CL du terminal TER un code SMS ou ussd propre au serveur SER, la communication étant alors initiée par l'interface de communication IC1_T du terminal TER, via le réseau RCM, à destination du serveur SER. A réception, par le serveur SER, de la communication en provenance du terminal TER, sous réserve que le serveur SER a une connaissance préalable du numéro MSISDN ou IMSI associé à la carte d'identification d'abonné CIA de l'utilisateur UT, l'utilisateur UT est authentifié par le serveur SER.

En S11, le serveur SER envoie alors une requête en création d'empreinte vocale REQ. EV à l'utilisateur UT, via le réseau RCM. Dans le cas où l'établissement de la communication en S10 est un appel vocal, la requête REQ. EV est de type vocal et est envoyée au terminal TER, au moyen de l'interface de communication ICA_S, via le réseau RCM. Elle est par exemple du type: « *veuillez enregistrer votre empreinte vocale. Pour commencer, veuillez prononcer votre nom et prénom ».* Dans le cas où l'établissement de la communication en S10 est établi par code DTMF, SMS ou ussd, le serveur SER émet en réponse un appel téléphonique vers le terminal TER via le réseau RCM, au moyen de l'interface de communication ICA_S. Au décroché du terminal TER, le serveur SER envoie alors la requête REQ. EV de type vocal précité. A titre d'alternative, au décroché du terminal TER, le serveur SER demande vocalement à l'utilisateur UT : « *Pour enregistrer votre empreinte vocale, tapez* « 1 » ». L'utilisateur UT tape alors « 1 » sur le clavier CL de son terminal TER et le serveur SER envoie alors la requête REQ. EV de type vocal précité. Selon encore un autre mode de réalisation non limitatif, dans le cas où l'établissement de la communication en S10 est mis en œuvre par code DTMF, SMS ou ussd, le serveur SER envoie en réponse au terminal TER, au moyen de son interface de communication IC1_S, via le réseau RCM, un message ussd ou SMS invitant l'utilisateur UT soit à contacter par téléphone le serveur SER pour créer son empreinte vocale, soit à taper un code particulier pour accéder directement dans le serveur SER à un service vocal interactif de création d'empreinte vocale qui générera alors la requête REQ. EV de type vocal précité.

En réponse à la requête REQ. EV, l'utilisateur UT prononce la phrase requise PHR qui est envoyée en S12 au serveur SER, au moyen de l'interface de communication ICA_T, via le réseau RCM. A réception de cette phrase, le module de création d'empreinte vocale CEV du serveur SER analyse en S13 la phrase prononcée et crée en S14 une empreinte vocale EV conformément à au moins une caractéristique physique de l'utilisateur UT. Ladite au moins une caractéristique physique appartient au groupe comprenant l'intonation, la cadence, l'accent avec le ou laquelle l'utilisateur UT prononce la phrase PHR. En S15, le serveur SER analyse l'empreinte vocale. Si l'empreinte vocale n'a pas été créée correctement, les étapes S11 à S15 sont itérées au moins une fois, le serveur SER demandant alors à l'utilisateur UT de prononcer une autre phrase, par exemple: « *le petit canard nage dans la rivière ».* Selon un autre exemple, le serveur SER peut également poser une question à l'utilisateur UT, comme par exemple : « *Quelle est votre date de naissance ?* ». Si l'empreinte vocale EV a été créée correctement, cette dernière est enregistrée en S16 dans le serveur SER et/ou dans le dispositif d'authentification AUT et/ou dans une base de données accessible par le serveur SER et le dispositif d'authentification AUT. L'empreinte vocale EV est enregistrée en correspondance avec l'identifiant ID du terminal TER qui est le numéro MSISDN ou IMSI précité dans le mode de réalisation proposé.

A l'issue de l'étape S16, le serveur SER peut envoyer un message de confirmation de création de l'empreinte vocale EV à l'utilisateur UT. Le message peut être vocal, de type SMS ou encore ussd.

En référence à la figure 5B, on décrit maintenant un procédé d'authentification d'un utilisateur UT qui requiert l'accès à un service proposé par le serveur SER.

En S20, l'utilisateur UT envoie au serveur SER une requête en communication COM avec le serveur SER à l'aide de son terminal TER. Une telle communication peut être établie en vocal ou par l'envoi au serveur SER d'un message SMS ou ussd, comme expliqué ci-dessus en S10. Le serveur SER identifie en S21 l'utilisateur UT par le numéro MSISDN ou IMSI contenu dans la requête S20. Pour identifier l'utilisateur UT, le serveur SER accède à une base de données contenant des informations d'identification de l'utilisateur UT (nom, prénom, adresse, etc...) mises en correspondance avec le numéro MSISDN ou IMSI. En variante, le serveur SER envoie une requête au dispositif d'authentification AUT, via son interface de communication IC2_S, ladite requête contenant le numéro MSISDN ou IMSI de l'utilisateur UT. Le dispositif d'authentification AUT active la brique d'authentification B_AUT₁ qui authentifie l'utilisateur UT selon un premier niveau, à l'aide du numéro MSISDN ou IMSI reçu et qui renvoie un message au serveur SER, via l'interface de communication IC2_A selon lequel l'utilisateur UT a bien été authentifié.

En S22, le serveur vocal SER envoie au terminal TER une requête REQ.SEL.SERVICE en sélection d'un service proposé par le serveur SER. Une telle requête est par exemple un message vocal du type : *« pour accéder au service SERV₁, dites «* 1 *», pour accéder au service SERV₂, dites « 2 », pour accéder au service SERV₃, dites « 3 »* ». Le message est alors envoyé par l'interface de communication ICA_S du serveur SER, via le réseau RCM. Selon un autre exemple, un telle requête est un message textuel du type : *« pour accéder au service SERV₁, tapez «* 1 *», pour accéder au service SERV₂, tapez « 2 », pour accéder au service SERV₃, tapez « 3 »* » s'il s'agit d'un message SMS, ou encore du type : *« pour accéder au service SERV₁, tapez « #001# », pour accéder au service SERV₂, tapez « #002# », pour accéder au service SERV₃, tapez « #003# »* » s'il s'agit d'un message ussd.

En S23, selon un mode de réalisation, l'utilisateur UT prononce dans le micro MIC de son terminal TER le code associé au service auquel il souhaite accéder. Selon un autre mode de réalisation, l'utilisateur UT tape sur le clavier CL de son terminal TER le code associé au service auquel il souhaite accéder, ce qui déclenche l'envoi d'une requête d'accès au service REQ. ACC. SERVICE au serveur SER, via le réseau RCM. Le code tapé peut-être du type DTMF, SMS ou ussd. La requête REQ. ACC. SERVICE contient le numéro MSISDN ou IMSI précité et le code associé au service demandé par l'utilisateur UT, dans l'exemple « 1 », « 2 » ou « 3 » ou encore « #001# », « #002# » ou « #003# ».

A réception de la requête REQ. ACC. SERVICE, en S24, le serveur SER transmet cette requête au dispositif d'authentification AUT. Dans le cas où le service requis nécessite une authentification AUT₁ de premier niveau, le dispositif d'authentification AUT, ayant déjà préalablement authentifié l'utilisateur UT, envoie une réponse au serveur SER lui autorisant l'accès de l'utilisateur UT au service requis. Une telle étape est classique est n'est donc pas décrite sur la figure 5B. Dans le cas où le service requis nécessite une authentification AUT₂ de deuxième niveau (forte), en S25, le dispositif d'authentification AUT envoie au terminal TER une requête d'authentification REQ_P en prononciation d'au moins un mot. Il s'agit par exemple du nom de l'utilisateur UT précédemment communiqué lors de la phase de création d'empreinte vocale illustrée en figure 5A ou bien encore d'une des phrases communiquées par l'utilisateur UT lors de cette phase. Selon un autre mode de réalisation, la requête REQ_P peut être envoyée directement par le serveur SER après avoir été reçue par ce dernier en provenance du dispositif d'authentification AUT. Une telle requête est par exemple un message vocal du type : « *Veuillez prononcer au moins un mot ».* Le message est alors envoyé par l'interface de communication ICA_ A du dispositif d'authentification AUT, via le réseau RCM, au terminal TER. Selon un autre exemple, une telle requête est un message textuel du type : « *veuillez rappeler le serveur SER et prononcer au moins un mot M* » ou encore « *le serveur SER vous rappelle dans 1 minute pour vous demander de prononcer au moins un mot ».*

En S26, à réception de la requête REQ_P dans le terminal TER, l'utilisateur UT prononce ledit au moins un mot M, ledit au moins un mot étant transmis au dispositif d'authentification AUT directement en réponse REP_P à la requête REQ_P ou bien indirectement via le serveur SER, si l'utilisateur UT a rappelé le serveur SER ou a été rappelé par le serveur SER pour prononcer ledit au moins un mot.

En S27, le dispositif d'authentification enregistre ledit au moins un mot M. En S28, la brique logicielle B_AUT ₂ du dispositif d'authentification AUT vérifie si le mot M prononcé correspond à l'empreinte EV créée précédemment. En particulier, la brique logicielle B_AUT₂ vérifie ledit mot M selon au moins une des caractéristiques physiques de l'utilisateur UT, telles que par exemple l'intonation, la cadence ou encore l'accent avec le et/ou lesquels l'utilisateur UT a prononcé ledit mot M. S'il n'existe pas de correspondance entre le mot M et l'empreinte vocale EV (branche « N » sur la figure 5B), les étapes S25 à S28 sont par exemple itérées un nombre prédéfini de fois. Selon un autre exemple, le dispositif d'authentification AUT envoie un message vocal ou textuel au terminal TER de l'utilisateur UT lui indiquant de recréer à nouveau une empreinte vocale. Si, par contre, il existe bien une correspondance entre le mot M et l'empreinte vocale EV (branche « O1 » sur la figure 5B), et si une authentification AUT₃ de troisième niveau n'est pas nécessaire pour le service requis par l'utilisateur UT, le dispositif d'authentification AUT envoie en S29a au terminal TER un message vocal ou textuel AUT_OK lui confirmant que l'authentification forte a réussi pour le service requis. Selon un autre mode de réalisation, le message AUT_OK peut être envoyé directement par le serveur SER après avoir été reçu par ce dernier en provenance du dispositif d'authentification AUT. En S30a, l'utilisateur UT accède alors au service requis via son terminal TER. Le message AUT_OK n'est pas nécessairement envoyé, l'utilisateur UT accédant alors directement au service requis, via son terminal TER, une fois que la correspondance entre ledit au moins un mot et l'empreinte vocale EV a été établie en S28.

Dans le cas où il existe bien une correspondance entre le mot M et l'empreinte vocale EV et que le service requis nécessite une authentification AUT₃ de troisième niveau (très forte) (branche « O2 » sur la figure 5B), en S29b, le dispositif d'authentification AUT envoie au terminal TER une requête d'authentification complémentaire. Il s'agit d'une requête REQ_MP en demande de mot de passe, par exemple le code confidentiel CC précité, typiquement un code PIN, associé à la carte d'identité d'abonné CIA de l'utilisateur UT et préalablement enregistré en association avec le numéro MSISDN ou IMSI de l'utilisateur UT et en association avec l'empreinte vocale EV de ce dernier, soit dans le serveur SER, soit dans le dispositif d'authentification AUT, soit encore dans une base de données accessible par le serveur SER et le dispositif d'authentification AUT. Selon un autre mode de réalisation, la requête REQ_MP peut être envoyée directement par le serveur SER après avoir été reçue par ce dernier en provenance du dispositif d'authentification AUT. Une telle requête est par exemple un message vocal du type : « *Veuillez prononcer*/*taper votre code confidentiel* CC». Le message est alors envoyé par l'interface de communication ICA_ A du dispositif d'authentification AUT, via le réseau RCM, au terminal TER. Selon un autre exemple, une telle requête est un message textuel du type : « *veuillez rappeler le serveur SER et prononcer votre code confidentiel CC»* ou encore « *le serveur SER vous rappelle dans 1 minute pour vous demander de prononcer votre code confidentiel CC»* ou encore « veuillez taper *votre code confidentiel CC».*

En S30b, à réception de la requête REQ_MP dans le terminal TER, l'utilisateur UT prononce ou tape le code confidentiel CC selon le mode de réalisation mis en œuvre, ledit code confidentiel CC étant transmis au dispositif d'authentification AUT directement en réponse REP_MP à la requête REQ_MP, soit via l'interface de communication ICA_T du terminal TER si le code confidentiel CC est prononcé, soit via l'interface de communication IC1_T du terminal TER si le code confidentiel CC est tapé (code SMS, ussd ou DTMF). Alternativement, le code confidentiel CC est transmis indirectement via le serveur SER, si l'utilisateur UT a rappelé le serveur SER ou a été rappelé par le serveur SER pour prononcer ou taper le code confidentiel CC.

En S31, la brique logicielle B_AUT₃ du dispositif d'authentification AUT vérifie si le code confidentiel prononcé ou tapé correspond au code confidentiel CC préalablement enregistré. S'il n'existe pas de correspondance entre les deux codes (branche « N » sur la figure 5B), les étapes S29b et suivantes sont par exemple itérées avec un nombre d'itérations limité à par exemple 2. Selon un autre exemple, le dispositif d'authentification AUT envoie un message vocal ou textuel au terminal TER de l'utilisateur UT lui indiquant un refus de l'accès au service requis. Si, par contre, il existe bien une correspondance entre les deux codes confidentiels (branche « O » sur la figure 5B), le dispositif d'authentification AUT envoie en S32 au terminal TER un message vocal ou textuel AUT_OK lui confirmant que l'authentification très forte a réussi pour le service requis. Selon un autre mode de réalisation, le message AUT_OK peut être envoyé directement par le serveur SER après avoir été reçu par ce dernier en provenance du dispositif d'authentification AUT. En S33, l'utilisateur UT accède alors au service requis via son terminal TER. Le message AUT_OK n'est pas nécessairement envoyé en S32, l'utilisateur UT accédant alors directement au service requis, via son terminal TER, une fois que la correspondance entre les codes confidentiels a été établie en S31.

## Revendications

1. Procédé d'authentification d'un utilisateur d'un service sur un terminal de communication (TER), comprenant ce qui suit, au niveau du terminal de communication :
- envoyer (S23) à un serveur une requête d'accès audit serveur, ladite requête d'accès étant vocale ou textuelle et comprenant un premier identifiant associé au terminal de communication et un deuxième identifiant associé à un service requis dans ledit serveur,
- recevoir (S25) en provenance d'un dispositif d'authentification une requête d'authentification demandant à l'utilisateur de prononcer au moins un mot,
- communiquer (S26) ledit au moins un mot prononcé par l'utilisateur au dispositif, ledit au moins un mot prononcé correspondant à une empreinte vocale (EV) de l'utilisateur préalablement enregistrée en association avec l'identifiant dudit terminal de communication,
- recevoir (S29b) en provenance du dispositif une requête d'authentification complémentaire de l'utilisateur.

2. Procédé d'authentification selon la revendication 1, dans lequel la requête d'authentification complémentaire reçue est une requête de demande de mot de passe, à laquelle, en réponse, le terminal communique (S30b) le mot de passe requis sous forme textuelle ou vocale.

3. Procédé d'authentification selon la revendication 1, dans lequel le deuxième identifiant associé au service requis appartient au groupe comprenant un code à Tonalités Multi-Fréquences à deux tons, un code ussd, un message sms.

4. Procédé d'authentification selon la revendication 1, dans lequel le au moins un mot prononcé qui est communiqué au dispositif d'authentification est identifié selon au moins une caractéristique physique de l'utilisateur.

5. Procédé d'authentification selon la revendication 4, dans lequel ladite au moins une caractéristique physique appartient au groupe comprenant l'intonation, la cadence, l'accent avec le ou laquelle l'utilisateur prononce le mot.

6. Terminal de communication pour mettre en œuvre un accès authentifié d'un utilisateur à un service, ledit terminal comprenant un processeur (UTR_T) qui est configuré pour mettre en œuvre ce qui suit :
- envoyer à un serveur une requête d'accès audit serveur, ladite requête d'accès étant vocale ou textuelle et comprenant un premier identifiant associé au terminal de communication et un deuxième identifiant associé à un service requis dans ledit serveur,
- recevoir en provenance d'un dispositif d'authentification une requête d'authentification demandant à l'utilisateur de prononcer au moins un mot,
- communiquer ledit au moins un mot prononcé par l'utilisateur au dispositif,
ledit au moins un mot prononcé correspondant à une empreinte vocale de l'utilisateur préalablement enregistrée en association avec l'identifiant dudit terminal de communication,
- recevoir en provenance du dispositif une requête d'authentification complémentaire de l'utilisateur.

7. Dispositif d'authentification d'un utilisateur d'un service accédé au moyen d'un terminal de communication, le dispositif comprenant un processeur (UTR_A) qui est configuré pour mettre en œuvre ce qui suit :
- recevoir en provenance d'un serveur ayant reçu une requête d'accès audit serveur envoyée par le terminal de communication, ladite requête d'accès étant vocale ou textuelle et comprenant un premier identifiant associé au terminal de communication et un deuxième identifiant associé à un service requis dans ledit serveur,
- envoyer au terminal de communication associé au premier identifiant une requête d'authentification demandant à l'utilisateur de prononcer au moins un mot,
- recevoir en provenance du terminal le mot prononcé, ledit un mot prononcé correspondant à une empreinte vocale de l'utilisateur préalablement enregistrée en association avec le premier identifiant,
- envoyer au terminal une requête d'authentification complémentaire de l'utilisateur.

8. Système d'authentification **caractérisé en ce qu'**il comprend :
- un terminal de communication selon la revendication 6,
- un dispositif d'authentification selon la revendication 7.

9. Programme d'ordinateur comportant des instructions de code de programme pour la mise en œuvre du procédé d'authentification selon l'une quelconque des revendications 1 à 5, lorsqu'il est exécuté sur un ordinateur.

10. Support d'informations lisible par un ordinateur, et comportant des instructions d'un programme d'ordinateur selon la revendication 9.

## Patentansprüche

1. Verfahren zur Authentifizierung eines Benutzers eines Dienstes auf einem Kommunikationsendgerät (TER), umfassend an dem Kommunikationsendgerät Folgendes:
- Senden (S23), an einen Server, einer Zugriffsanforderung auf den Server, wobei die Zugriffsanforderung sprachlich oder textlich ist und eine erste Kennung, die dem Kommunikationsendgerät zugeordnet ist, und eine zweite Kennung, die einem angeforderten Dienst in dem Server zugeordnet ist, umfasst,
- Empfangen (S25), von einer Authentifizierungsvorrichtung, einer Authentifizierungsanforderung, die den Benutzer auffordert, mindestens ein Wort auszusprechen,
- Übermitteln (S26) des mindestens einen von dem Benutzer ausgesprochenen Worts an die Vorrichtung,
wobei das mindestens eine ausgesprochene Wort einem Sprachabdruck (EV) des Benutzers entspricht, der zuvor unter Zuordnung zu der Kennung des Kommunikationsendgeräts gespeichert wurde,
- Empfangen (S29b), von der Vorrichtung, einer ergänzenden Anforderung zur Authentifizierung des Benutzers.

2. Verfahren zur Authentifizierung nach Anspruch 1, wobei die empfangene ergänzende Anforderung zur Authentifizierung eine Passwortanfrage-Anforderung ist, auf die das Kommunikationsendgerät als Antwort das angeforderte Passwort in textlicher oder sprachlicher Form übermittelt (S30b).

3. Verfahren zur Authentifizierung nach Anspruch 1, wobei die dem angeforderten Dienst zugeordnete zweite Kennung zu der Gruppe gehört, die einen Doppelton-Mehrfrequenzton-Code, einen USSD-Code, eine SMS-Nachricht umfasst.

4. Verfahren zur Authentifizierung nach Anspruch 1, wobei das mindestens eine ausgesprochene Wort, das an die Authentifizierungsvorrichtung übermittelt wird, anhand mindestens eines physischen Merkmals des Benutzers identifiziert wird.

5. Verfahren zur Authentifizierung nach Anspruch 4, wobei das mindestens eine physische Merkmal zu der Gruppe gehört, die den Tonfall, den Rhythmus, den Akzent, mit dem der Benutzer das Wort ausspricht, umfasst.

6. Kommunikationsendgerät zur Durchführung eines authentifizierten Zugriffs eines Benutzers auf einen Dienst, wobei das Endgerät einen Prozessor (UTR_T) umfasst, der dazu ausgestaltet ist, Folgendes durchzuführen:
- Senden, an einen Server, einer Zugriffsanforderung auf den Server, wobei die Zugriffsanforderung sprachlich oder textlich ist und eine erste Kennung, die dem Kommunikationsendgerät zugeordnet ist, und eine zweite Kennung, die einem angeforderten Dienst in dem Server zugeordnet ist, umfasst,
- Empfangen, von einer Authentifizierungsvorrichtung, einer Authentifizierungsanforderung, die den Benutzer auffordert, mindestens ein Wort auszusprechen,
- Übermitteln des mindestens einen von dem Benutzer ausgesprochenen Worts an die Vorrichtung,
wobei das mindestens eine ausgesprochene Wort einem Sprachabdruck des Benutzers entspricht, der zuvor unter Zuordnung zu der Kennung des Kommunikationsendgeräts gespeichert wurde,
- Empfangen, von der Vorrichtung, einer ergänzenden Anforderung zur Authentifizierung des Benutzers.

7. Vorrichtung zur Authentifizierung eines Benutzers eines Dienstes, auf den mittels eines Kommunikationsendgeräts zugegriffen wird, wobei die Vorrichtung einen Prozessor (UTR_A) umfasst, der dazu ausgestaltet ist, Folgendes durchzuführen:
- Empfangen, von einem Server, der eine von dem Kommunikationsendgerät gesendete Zugriffsanforderung auf den Server empfangen hat, wobei die Zugriffsanforderung sprachlich oder textlich ist und eine erste Kennung, die dem Kommunikationsendgerät zugeordnet ist, und eine zweite Kennung, die einem angeforderten Dienst in dem Server zugeordnet ist, umfasst,
- Senden, an das der ersten Kennung zugeordnete Kommunikationsendgerät, einer Authentifizierungsanforderung, die den Benutzer auffordert, mindestens ein Wort auszusprechen,
- Empfangen des ausgesprochenen Worts von dem Endgerät, wobei das eine ausgesprochene Wort einem Sprachabdruck des Benutzers entspricht, der zuvor unter Zuordnung zu der ersten Kennung gespeichert wurde,
- Senden, an das Endgerät, einer ergänzenden Anforderung zur Authentifizierung des Benutzers.

8. Authentifizierungssystem, **dadurch gekennzeichnet, dass** es umfasst:
- ein Kommunikationsendgerät nach Anspruch 6,
- eine Authentifizierungsvorrichtung nach Anspruch 7.

9. Computerprogramm, das Programmcodeanweisungen umfasst, die bei seiner Ausführung auf einem Computer das Authentifizierungsverfahren nach einem der Ansprüche 1 bis 5 durchführen.

10. Datenträger, der von einem Computer gelesen werden kann und Anweisungen eines Computerprogramms nach Anspruch 9 umfasst.

## Claims

1. Method for authenticating a user of a service on a communication terminal (TER), comprising the following, on the communication terminal:
- sending (S23), to a server, a request to access said server, said access request being vocal or textual and comprising a first identifier associated with the communication terminal and a second identifier associated with a service requested in said server,
- receiving (S25), from an authentication device, an authentication request asking the user to speak at least one word,
- communicating (S26) said at least one word spoken by the user to the device,
said at least one spoken word corresponding to a voiceprint (EV) of the user recorded beforehand in association with the identifier of said communication terminal,
- receiving (S29b), from the device, an additional authentication request for additional authentication of the user.

2. Authentication method according to Claim 1, wherein the received additional authentication request is a password request, to which the terminal communicates (S30b), in response, the requested password in text or voice form.

3. Authentication method according to Claim 1, wherein the second identifier associated with the requested service belongs to the group comprising a dual-tone multi-frequency tone code, a USSD code, and an SMS message.

4. Authentication method according to Claim 1, wherein the at least one spoken word that is communicated to the authentication device is identified according to at least one physical characteristic of the user.

5. Authentication method according to Claim 4, wherein said at least one physical characteristic belongs to the group comprising intonation, speed, and the accent with which the user speaks the word.

6. Communication terminal for implementing authenticated access of a user to a service, said terminal comprising a processor (UTR_T) that is configured to implement the following:
- sending, to a server, a request to access said server, said access request being vocal or textual and comprising a first identifier associated with the communication terminal and a second identifier associated with a service requested in said server,
- receiving, from an authentication device, an authentication request asking the user to speak at least one word,
- communicating said at least one word spoken by the user to the device,
said at least one spoken word corresponding to a voiceprint of the user recorded beforehand in association with the identifier of said communication terminal,
- receiving, from the device, an additional authentication request for additional authentication of the user.

7. Device for authenticating a user of a service accessed by way of a communication terminal, the device comprising a processor (UTR_A) that is configured to implement the following:
- receiving, from a server that has received a request to access said server sent by the communication terminal, said access request being vocal or textual and comprising a first identifier associated with the communication terminal and a second identifier associated with a service requested in said server,
- sending, to the communication terminal associated with the first identifier, an authentication request asking the user to speak at least one word,
- receiving, from the terminal, the spoken word, said one spoken word corresponding to a voiceprint of the user recorded beforehand in association with the first identifier,
- sending, to the terminal, an additional authentication request for additional authentication of the user.

8. Authentication system, **characterized in that** it comprises:
- a communication terminal according to Claim 6,
- an authentication device according to Claim 7.

9. Computer program comprising program code instructions for implementing the authentication method according to any one of Claims 1 to 5 when it is executed on a computer.

10. Computer-readable information medium comprising instructions of a computer program according to Claim 9.
